# EUROPEAN PATENT SPECIFICATION

(11) **EP 2 598 782 B1**
(45) Date of publication and mention of the grant of the patent: **14.05.2014**
(21) Application number: 11727542.0
(22) Date of filing: 30.05.2011
(51) Int. Cl.: F16K 15/18, F16K 17/04, F16K 31/12

(54) **HIGH PRESSURE MECHANICAL SAFETY VALVE**
HOCHDRUCK- MECHANISCHES SICHERHEITSVENTIL
SOUPAPE MÉCANIQUE DE SÉCURITÉ À HAUTE PRESSION

(30) Priority: 29.07.2010 IT PR20100064
(43) Date of publication of application: 05.06.2013
(73) Proprietor: GEA Mechanical Equipment Italia S.P.A., 43123 Parma (IT)
(72) Inventor: GIOBERTI, Fabio, I-43123 Parma (IT); MADURERI, Michele, I-43123 Parma (IT)
(74) Representative: Gotra, Stefano
(86) International application number: PCT/IB2011/052365
(87) International publication number: WO 2012/014095

(56) References cited:
- EP-A1- 0 059 599
- DE-A1- 4 305 631
- FR-A- 1 070 395

## Description

### TECHNICAL FIELD AND BACKGROUND ART.

The present invention relates to a mechanical safety valve for environments with high/very high pressures (up to 2200 bar) and high temperatures, applicable to a wide range of flow rates (30 - 60000 l/h); it has prevalent use in high pressure pumps and homogenizers, which must be equipped with safety devices that prevent them from reaching critical conditions that imply risks of sudden breaks and a hazard for users.

The presence of an overpressure or pressure limiting valve for protection against possible overpressures that may be created inside the compression head as a result of the pumping action of the machine to which to valve is applied is already known.

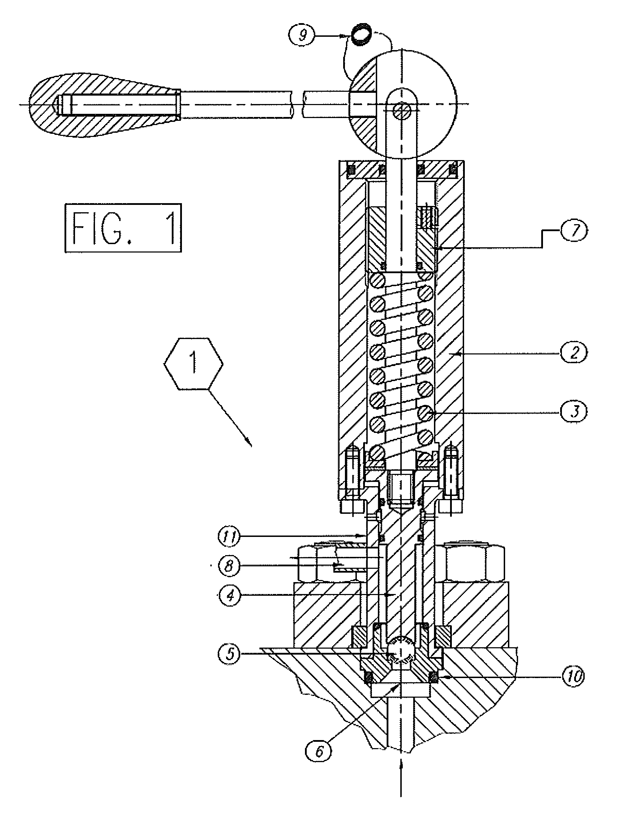

Said valve, schematically illustrated in figure 1, comprises a spring for releasing overpressures and also an opening lever mounted on an eccentric for manually deactivating the preload and hence the valve on the occasion of equipment flushing cycles (CIP) to clean the seat of the sphere shutter and drain pipe.

However, there is a felt need to be able to control the deactivation of the valve remotely.

In this context, the technical task at the basis of the present invention is to propose a valve incorporating a device capable of remotely actuating the deactivation of the valve and commanding/controlling the forced opening and the forced closing of the valve.

### DISCLOSURE OF THE INVENTION.

Moreover, further objects of the present invention are:
- to ensure that the safety valve can be integrally assembled prior to calibration,
- to ensure that the safety valve, once installed, can be demounted from its housing without compromising its calibration,
- to ensure that the safety valve permits an immediate opening and release of the overpressure once the pressure set-point value is reached,
- to ensure that the state of opening and closing of the valve can be signalled by means of a sensor,
- to ensure that the device is extremely simple and economical.

EP 0059599-A1 discloses a low temperature valve mechanism working with liquid helium at high pressures and provided with mechanical means for a forced opening of the valve.

However it cannot achieve a forced closure of the valve, it is not suitable in the case of pulsing loads and it relates to low temperatures and not to high temperatures.

DE 4305631-A1 relates to a pressure-medium-controlled drive with encapsulated springs, but it is not suitable for a forced closure of the valve, for pulsing loads or for high pressures.

FR 1070395 relates to a valve head not suitable for a forced closure of the valve, for pulsing loads or for high pressures.

Furthermore the force of the spring is not adjustable and it is necessary to substitute the spring when a different load is desired.

The defined technical task and the specified objects hereof are substantially achieved by a valve comprising the technical characteristics described in one or more of the appended claims.

### BRIEF DESCRIPTION OF DRAWINGS.

Further characteristics and advantages of the present invention will become more apparent from the approximate, and hence non-restrictive, description of a preferred, but not exclusive, embodiment of a valve as illustrated in the appended drawings, in which:
- figure 1 schematically shows a valve of a known type;
- figures 2 and 3 illustrate a cross section of the valve of the present invention, respectively in a closing and opening configuration.

### BEST MODE FOR CARRYING OUT THE INVENTION.

With reference to the figures, 1 indicates overall an overpressure valve, normally installed on the compression head of a homogenizer or on the highpressure delivery line of a pump to protect the machine and the operators from accidental overpressures.

The valve 1 has a body 2 in which there is inserted a spring 3 acting upon the stem of a shutter element 4 ending with a free sphere 5, preferably of the ceramic type, suitable for closing an aperture 6 in contact with high pressure environments.

Unlike the flat or conical shutter elements of the previously mentioned prior art, which are not suitable for high pressures or pulsing loads, the free sphere 5 allows operation with pulsing loads present in the lower high pressure area. There are also present longitudinal guides (absent in the aforementioned prior art) which allow operation with pulsing loads.

The sphere 5 is thus maintained in a closed position by means of the load of the spring 3, whereas it moves into the open position when the pressure in the high pressure environment exceeds the calibration value (set-point), preset at the final test stage by acting upon an adjustment screw 7, which on being screwed into the body 2 modifies the compression of the spring 3.

In such a case the product or the fluid present in the high pressure environment rises inside a lower body 11 around the stem and is discharged through an outlet 8.

A security seal 9, protected by a cover, prevents any alteration in the spring preload.

Since the valve closes again when the pressure falls below the opening value, in order to obtain the re-closing of the device, in the case of a homogenizer it may be necessary to act on the pressure regulator to reduce the pressure inside the compression head, whereas in the case of a pump it may be necessary to reduce the machine speed. 10 indicates sealing gaskets for the valve, of the Oring type.

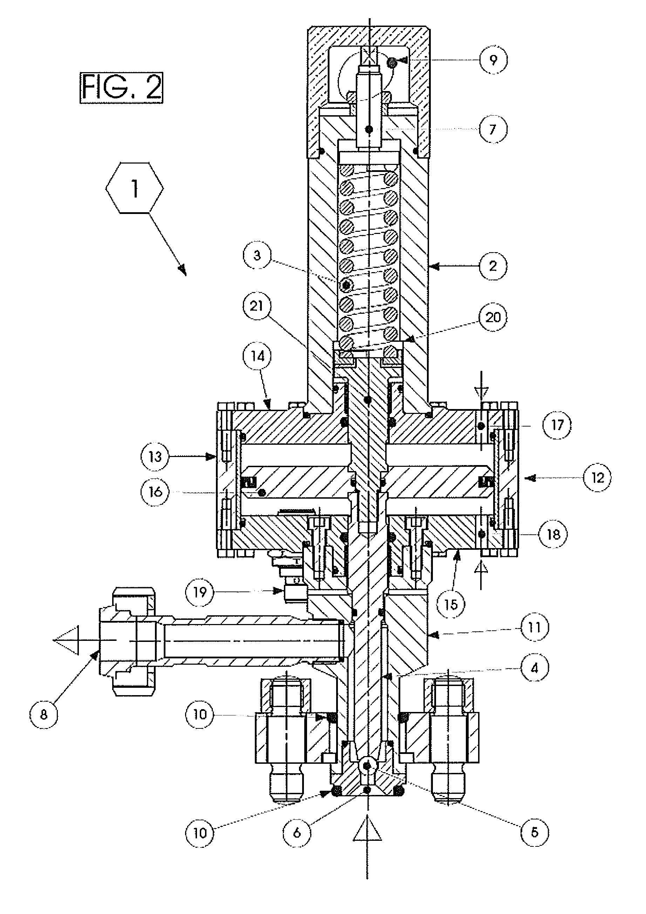

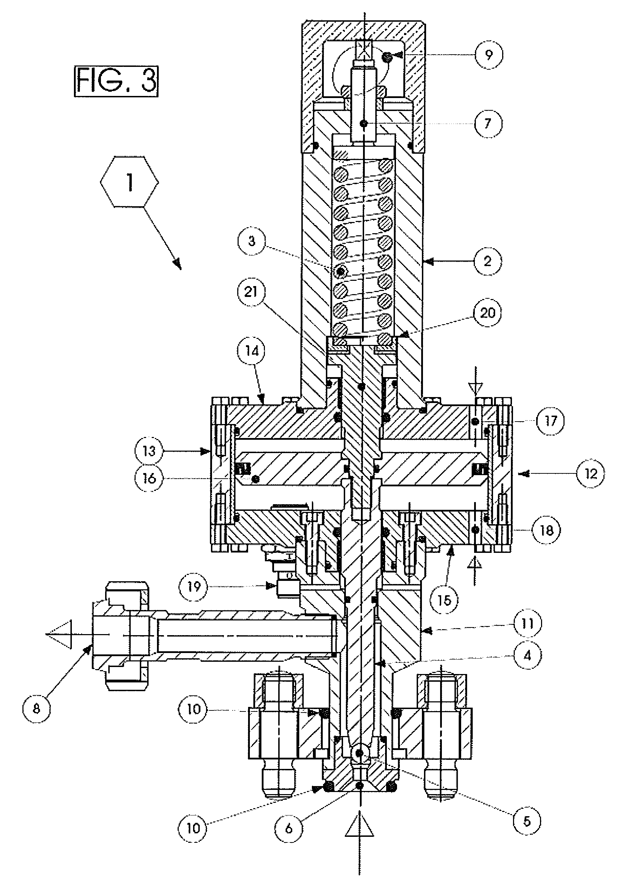

In the valve of the present invention (figures 2 and 3), between the elastic means (spring 3) and the actual shutter element (sphere 5) there is originally a pneumatic actuator device 12, which enables remote control of the valve, with particular reference to opening and closing.

The pneumatic device 12 comprises a pneumatic cylinder 13 provided with an upper flange 14 and a lower flange 15, between which a piston 16 slides.

On the flanges 14 and 15 there are respectively defined holes 17 and 18 for the intake and exit of air.

In the absence of an injection of air through the hole 17 or the hole 18, the valve behaves like a traditional overpressure valve of the type illustrated in figure 1. However, in the event of an injection of air through the hole 18 of the lower flange 15 (and associated suitable channels external to the valve), remotely controlled via a suitable command and control unit, the valve is forced open (despite the pressure of the high pressure environment being lower than the set-point value), overcoming the preload of the spring 3, which is further compressed in order to allow the lifting of the shutter element.

This occurs, for example, on the occasion of equipment flushing cycles in which it is necessary to clean the valve seat, the sphere shutter element and the drain pipe.

The piston 16 slides and compresses the spring 3 until reaching a limit stop 20, at which point the valve is in a condition of maximum opening.

The piston 16 comprises in fact a first portion 21 interacting with the spring 3, and a second portion (coinciding with the shutter element 4) interacting with the sphere 5. The first portion and the second portion are solidly joined to each other.

In the event of an injection of air through the hole 17 of the upper flange 14, the valve is instead forced closed, for example in the case of homogenizers or pumps used to supply spray dryers in systems for the spraying and drying of liquid suspensions.

The pneumatic device 12 constitutes mechanical means for the remote control of the valve 1 (to allow a forced opening and closing thereof), together with the command and control unit and an inductive-type position sensor 19.

Said sensor 19, which signals the status of the valve and therefore when the valve opens can be utilized by the user, for example, to activate an alarm or provide for the pumping of the discharged product, when the valve opens.

The remote control means, according to unillustrated embodiments, may comprise hydraulic rather than pneumatic bidirectional actuators (for opening and closing).

Moreover, the inductive-type position sensors are "on/off"-type sensors that can be replaced by other more sophisticated sensors, capable of indicating with precision the percentage of opening of the safety valve (distance of the shutter element from its seat).

The present valve can assume four different configurations (the last two are movable configurations for reaching the final positions of valve open and valve closed, respectively):
- valve CLOSED (illustrated in figure 2): the high pressure area is below the set-point value of the safety valve, the pneumatic cylinder is not fed and the inductive sensor gives a signal of valve closed.
- Valve OPEN (illustrated in figure 3): the high pressure area takes on values equal to or greater than the set-point value, the pneumatic cylinder is not fed and the inductive sensor gives a signal of valve open. It is clear that, as in traditional valves, the safety valve will close again when the pressure falls to a pressure value lower than the calibration value.
- Valve OPEN FOR FLUSHING: the high pressure area takes on values lower than the set-point value, the final configuration on complete opening is as illustrated in figure 3, the cylinder is fed with air through the lower flange and the inductive sensor gives a signal of valve open.
- Valve FORCED CLOSED: the high pressure area takes on values just below the set-point value, the configuration is as illustrated figure 2, the cylinder is fed with air through the upper flange and the inductive sensor gives a signal of valve closed. This latter configuration, intended for special applications such as, for example, homogenizers or pumps used to supply spray dryers, requires a more complex control logic (compared to operation during flushing), as it is necessary to manage, with the aid of additional pressure sensors/transducers (not illustrated), the critical aspects of the forced closure of a safety overflow.

The pneumatic device 12 allows remote, bidirectional control of the opening of the valve (to facilitate flushing processes) and the closing of the valve (for special processes).

The pneumatic device 12, being interposed between the elastic means (spring 3) and actual shutter element (sphere 5), also allows two other previously mentioned objects to be achieved:
- it makes possible complete assembly of the valve prior to calibration,
- it makes it possible to completely remove the valve from its housing without disassembling it and thus without compromising the calibration thereof.

The pneumatic device 12 may be replaced as needed by a hydraulic device with the same operating modes (for example in the event it becomes necessary to apply larger forces for actuation of the safety valve).

To ensure that the safety valve permits an immediate opening and release of the overpressure once the pressure calibration value is reached, the seat holding the shutter element (sphere 5) is designed in such a way as to immediately increase the force acting upon the elastic means (spring 3) as soon as the opening of the valve itself begins. The inside diameters and internal profile of the holding seat are optimized and configured in such a way as to obtain this effect.

The valve of the present invention also has the following advantages:
- reduced maintenance;
- it enables precise calibration and an exact repeatability of triggering;
- rapid triggering;
- cleaning operations with the CIP technique are facilitated.

## Claims

1. A high pressure mechanical safety valve (1), of the type comprising a body (2) housing elastic means (3) acting on a shutter element (4) so as to maintain it normally in a position of closing an aperture (6) when the pressure in a high pressure area beyond the aperture (6) is lower than the pressure, settable to a fixed calibration value, exerted by the elastic means (3), **characterised in that** the valve comprises bidirectional mechanical means for remote control of the valve, interposed between the elastic means (3) and the shutter element (4) to allow both a forced opening and a forced closing of the valve (1).

2. The valve according to claim 1, wherein said mechanical means comprise a pneumatic actuator (12).

3. The valve according to claim 2, wherein the pneumatic actuator (12) comprises a pneumatic cylinder (13) provided with an upper flange (14) and a lower flange (15) on which there are respectively defined holes (17 and 18) through which air is injected to drive the movement of a piston (16) housed in the pneumatic cylinder (13).

4. The valve according to claim 1, wherein there is provided an inductive-type position sensor (19).

5. The valve according to claim 1, wherein the elastic means comprise a spring (3).

6. The valve according to claim 5, wherein there is provided an adjustment screw (7) for adjusting the preload or compression of the spring (3).

7. The valve according to claim 6, wherein there is provided a security seal (9), protected by a cover, to protect the adjustment screw (7) so as to prevent alterations in the spring preload.

8. The valve according to claim 3, wherein there is provided a limit stop (20) for the movement of the piston (16) during opening of the valve.

9. The valve according to claim 1, wherein the valve is assembled prior to the calibration.

10. The valve according to claim 1, wherein the valve can be removed without needing to be disassembled and thus without compromising the calibration thereof.

11. Valve according to claim 1, wherein the shutter element (4) ends with a free sphere (5) and slides between longitudinal guides.

## Patentansprüche

1. Mechanisches Hochdrucksicherheitsventil (1) des Typs umfassend einen Körper (2), in dem elastische Mittel (3) untergebracht sind, die auf ein Klappenelement (4) wirken, sodass dieses normalerweise in einer Position des Verschließens einer Öffnung (6) beibehalten wird, wenn der Druck in einem Hochdruckbereich jenseits der Öffnung (6) niedriger ist als der Druck, einstellbar auf einen fixierten Kalibrierungswert, der von den elastischen Mitteln (3) ausgeübt wird, **dadurch gekennzeichnet, dass** das Ventil bidirektionale mechanische Mittel für die Fernsteuerung des Ventils umfasst, die zwischen den elastischen Mitteln (3) und dem Klappenelement (4) eingesetzt sind, um ein forciertes Öffnen und ein forciertes Schließen des Ventils (1) zu erlauben.

2. Ventil nach Anspruch 1, wobei die mechanischen Mittel eine pneumatische Betätigungseinrichtung (12) umfassen.

3. Ventil nach Anspruch 2, wobei die pneumatische Betätigungseinrichtung (12) einen Pneumatikzylinder (13) umfasst, versehen mit einem oberen Flansch (14) und einem unteren Flansch (15), auf dem jeweils Löcher (17 und 18) definiert sind, durch die Luft eingespritzt wird, um die Bewegung eines Kolbens (16) anzutreiben, der im Pneumatikzylinder (13) untergebracht ist.

4. Ventil nach Anspruch 1, wobei ein induktiver Positionssensor (19) bereitgestellt ist.

5. Ventil nach Anspruch 1, wobei die elastischen Mittel eine Feder (3) umfassen.

6. Ventil nach Anspruch 5, wobei eine Einstellschraube (7) zur Einstellung der Vorspannung oder des Zusammendrückens der Feder (3) bereitgestellt ist.

7. Ventil nach Anspruch 6, wobei eine Sicherheitsdichtung (9) bereitgestellt ist, geschützt durch eine Abdeckung, um die Einstellschraube (7) zu schützen und so Beeinträchtigungen der Federvorspannung zu vermeiden.

8. Ventil nach Anspruch 3, wobei ein Endanschlag (20) für die Bewegung des Kolbens (16) während des Öffnens des Ventils bereitgestellt ist.

9. Ventil nach Anspruch 1, wobei das Ventil vor dem Kalibrieren montiert wird.

10. Ventil nach Anspruch 1, wobei das Ventil entfernt werden kann, ohne demontiert zu werden und somit ohne dessen Kalibrierung zu beeinträchtigen.

11. Ventil nach Anspruch 1, wobei das Klappenelement (4) mit einer freien Kugel (5) endet und zwischen Längsführungen verfährt.

## Revendications

1. Soupape mécanique de sécurité à haute pression (1) du type comprenant un corps (2) logeant des moyens élastiques (3) agissant sur un élément obturateur (4) de sorte à le maintenir normalement dans une position de fermeture d'une ouverture (6) lorsque la pression dans une zone à haute pression située au-delà de l'ouverture (6) est inférieure à la pression réglable à une valeur d'étalonnage fixe exercée par les moyens élastiques (3), **caractérisée en ce que** la soupape comprend des moyens mécaniques bidirectionnels, destinés au contrôle à distance de la soupape, interposés entre les moyens élastiques (3) et l'élément obturateur (4) pour permettre de réaliser aussi bien une ouverture qu'une fermeture forcée de la soupape (1).

2. Soupape selon la revendication 1, dans laquelle lesdits moyens mécaniques comprennent un actionneur pneumatique (12).

3. Soupape selon la revendication 2, dans laquelle l'actionneur pneumatique (12) comprend un vérin pneumatique (13) pourvu d'une bride supérieure (14) et d'une bride inférieure (15) sur lesquelles se trouvent des orifices respectivement définis (17 et 18) à travers lesquels l'air est injecté pour entraîner le déplacement d'un piston (16) logé dans le vérin pneumatique (13).

4. Soupape selon la revendication 1, dans laquelle il est prévu un capteur de position de type inductif (19).

5. Soupape selon la revendication 1, dans laquelle lesdits moyens élastiques comprennent un ressort (3).

6. Soupape selon la revendication 5, dans laquelle il est prévu une vis de réglage (7) servant à régler la précharge ou la compression du ressort (3).

7. Soupape selon la revendication 6, dans laquelle il est prévu un joint de sécurité (9), protégé par un cache, afin de protéger la vis de réglage (7) de manière à empêcher toute altération dans la précharge de ressort.

8. Soupape selon la revendication 3, dans laquelle il est prévu une butée de fin de course (20) servant au déplacement du piston (16) lors de l'ouverture de la soupape.

9. Soupape selon la revendication 1, dans laquelle la soupape est assemblée avant l'étalonnage.

10. Soupape selon la revendication 1, dans laquelle la soupape peut être retirée sans qu'il y ait besoin de la démonter et ainsi sans compromettre son étalonnage.

11. Soupape selon la revendication 1, dans laquelle l'élément obturateur (4) se termine par une bille libre (5) et coulisse entre des guides longitudinaux.
